Europäisches Patentamt

European Patent Office

Office européen des brevets

(11) Publication number: **0 440 162 A2**

# EUROPEAN PATENT APPLICATION

(21) Application number: 91101137.7

(22) Date of filing: 29.01.91

(51) Int. Cl.⁵: **B29C 67/18**, B29C 59/00, C08J 7/00, //B29K105:04, B29K75:00,B29K23:00

(30) Priority: 29.01.90 US 471964

(43) Date of publication of application: 07.08.91 Bulletin 91/32

(84) Designated Contracting States: AT BE CH DE DK ES FR GB GR IT LI LU NL SE

(71) Applicant: TIP ENGINEERING GROUP, INC. 28501 Orchard Lake Road Farmington Hills, MI 48018(US)

(72) Inventor: Powell, Richard E. 24 Oakland Park Blvd. Pleasant Ridge, Michigan 48069(US)

(74) Representative: Schaumburg, Thoenes & Englaender Mauerkircherstrasse 31 W-8000 München 80(DE)

(54) Process of in situ bonding thermosetting plastic to a polyolefin and lamination formed thereby.

(57) A process producing a laminate of a very low density plastic and a thermosetting plastic involving the steps of flame treating a surface of the polyolefin piece to break down the waxy component and coating the treated surface with isocyanate. The polyolefin piece is placed in a mold with the treated surface defining a part of the mold cavity, and upon injection of the thermosetting plastic components including isocyanate into the cavity, in situ bonding occurs to form the laminate.

EP 0 440 162 A2

# PROCESS OF IN SITU BONDING THERMOSETTING PLASTIC TO A POLYOLEFIN AND LAMINATION FORMED THEREBY

## BACKGROUND OF THE INVENTION

This invention concerns bonding processes for bonding dissimilar thermosetting plastic materials to a very low density plastic polyolefin such as polyethylene.

Automotive trim pieces are often formed with a layer of polyurethane foam bonded to a structural substrate, such as a sheet of metal or plastic.

Polyethylene is an attractive candidate for such a substrate because of its low cost, but great difficulties have been encountered in satisfactorily bonding thermosetting materials such as polyurethane foam to polyethylene and other polyolefins due to the waxy component of polyolefins,

It has heretofore been known to flame prime the surface of these materials to improve adhesion to various materials.

Exotic adhesives have also been developed.

There has not heretofor been provided a low cost production process for in situ formation of laminates using a polyolefin substrate and covering layer of a low density plastic thermosetting material such as polyurethane foam.

## SUMMARY OF THE INVENTION

The process according to the present invention involves the step of flame treating of a surface of a polyolefin piece at a sufficient heat intensity to cause a chemical breakdown of the waxy component of the material at the surface.

The surface is cleaned of oxidants, as by wiping with naptha, and, after cooling, the surface is sprayed with a liquid coating of a diluted mixture of isocyanate, a component of the thermosetting plastic, such as polyurethane.

The coated piece is placed in a foaming mold, with the treated surface defining one side of the mold cavity, and a mixture of the components of the thermosetting plastic including isocyanate, is injected into the cavity.

The resulting thermosetting plastic is strongly bonded to the polyolefin primed surface by the cross linking of the liquid isocyanate to both the polyolefin treated surface and the thermosetting plastic.

A low cost laminate structure suitable for auto trim parts is thereby produced.

## DESCRIPTION OF THE DRAWINGS

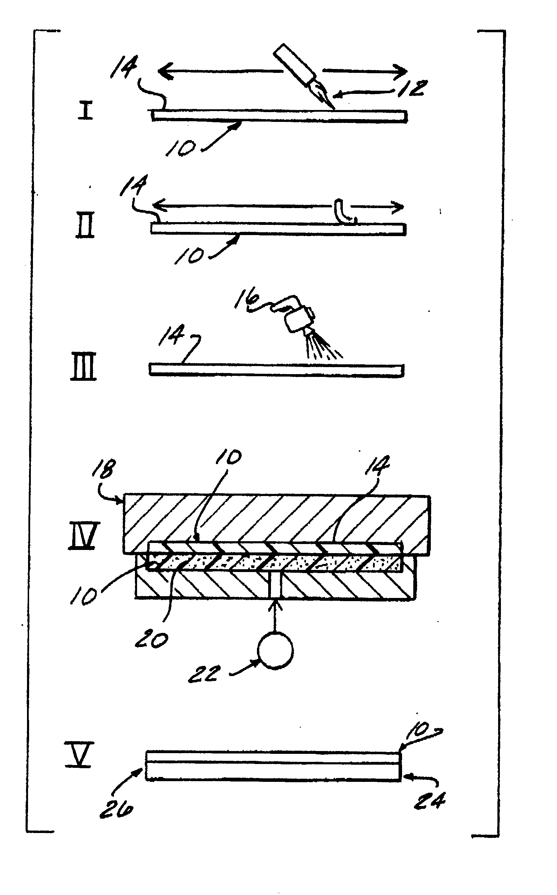

The Figure is a diagrammatic representation of the process steps according to the present invention.

## DETAILED DESCRIPTION

In the following detailed description, certain specific terminology will be employed for the sake of clarity and a particular embodiment described in accordance with the requirements of 35 USC 112, but it is to be understood that the same is not intended to be limiting and should not be so construed inasmuch as the invention is capable of taking many forms and variations within the scope of the appended claims.

Referring to the Figure, in Step I a sheet 10 of a polyolefin plastic, i.e., polyethylene, is depicted having a burner 12 generating a gas flame directed against one surface 14. The flame is passed over the surface at a controlled rate so as to cause a breakdown of the waxy component of the molecules at the surface without undue oxidation. This rate would of course vary with the various parameters of a given set-up, such as the particular flame intensity and other factors, a typical rate being 500-600 feet per minute.

After this flame treatment, the surface 14 is allowed to cool and is wiped with a suitable cleaner to remove oxidants, such as with naptha, this step indicated in Step II.

The surface 14 is then coated in step III, as with a sprayer 16 directing a spray of a diluted solution of isocyanate thereon.

It has been found that isocyanate, which is a component of many thermosetting plastics such as polyurethane, will bond with the broken down polyethylene molecules at the surface under conditions of heat and pressure as occur in a foam injection molding process.

This process is indicated in Step IV, in which the sheet 10 is positioned in an injection mold 18 with the flame treated and coated surface 14 defining one side of a mold cavity 20. A heated mixture of isocyanate and polyol (with suitable catalyst) is injected using a blow molding injection apparatus 22 into the mold cavity 20.

These components form a layer or mass of polyurethane foam deposited on the polyethylene sheet 10. As noted, it has been found that during injection molding conditions, the isocyanate coating will link with the broken down molecules at the surface 14 of the polyethylene sheet 10 and, being a component of the polyurethane foam, the isocyanate also combines to form polyurethane, acting as a bridge by cross linking to create an effective bond between the foam layer 24 and the polyethylene sheet 10. This forms a laminate 26 of the layer of polyurethane foam 24 and sheet 10, the polyethylene sheet 10 acting as the structural substrate.

The resulting laminate 26 is suitable for many auto interior trim pieces, such as instrument panels, door panels, air bag deployment doors, etc.

## Claims

1. A process of producing a laminate comprised of a polyolefin layer and a compatible thermosetting plastic layer bonded thereto, comprising the steps of:

   flame heating a surface of a piece of very low density polyolefin plastic sufficiently to break down the waxy component thereof at the surface;

   removing any oxidants formed from said surface;

   cooling said flame heated surface;

   coating said surface with liquid isocyanate;

   placing said polyolefin piece in a mold so as to partially define in part a mold cavity with said coated surface of said polyolefin piece;

   injecting components of a thermosetting plastic including isocyanate into said cavity so as to form a mass of said thermoplastic plastic deposited on said coated surface of said polyolefin piece, whereby an in situ bonding between said polyolefin piece and said layer of thermosetting plastic occurs along the interface thereof;

   removing said polyolefin piece and thermosetting plastic layer adhered thereto from said mold to provide a composite laminate.

2. The process according to claim 1 wherein said thermosetting plastic is polyurethane and a polyurethane foam is formed by said injection step.

3. The process according to claim 2 wherein a polyethylene sheet is employed as said polyolefin piece.

4. The laminate formed by the process of claim 3.

I

II

III

IV

V

14    12    10

14    10

16    14

18    10    14
10    20    22

10    26    24